# EUROPEAN PATENT SPECIFICATION

(11) **EP 1 989 135 B1**
(45) Date of publication and mention of the grant of the patent: **17.07.2013**
(21) Application number: 07709347.4
(22) Date of filing: 14.02.2007
(51) Int. Cl.: B65G 47/06, B65G 59/06, B23Q 7/10, B25J 9/16, B65H 1/00

(54) **A METHOD AND AN APPARATUS FOR HANDLING PARTS**
VERFAHREN UND VORRICHTUNG ZUR HANDHABUNG VON TEILEN
PROCÉDÉ ET APPAREIL DE MANUTENTION DE PIÈCES

(30) Priority: 23.02.2006 SE 0600390
(43) Date of publication of application: 12.11.2008
(73) Proprietor: HangOn AB, 330 33 Hillerstorp (SE)
(72) Inventor: TÖREFORS, Jakob, S-331 95 Värnamo (SE)
(74) Representative: Jacobsson, Peter
(86) International application number: PCT/SE2007/000132
(87) International publication number: WO 2007/097682

(56) References cited:
- EP-A1- 0 647 927
- WO-A1-01/31106
- JP-A- 10 235 049
- US-A- 3 598 004
- US-A- 3 598 004
- US-A- 4 766 826
- US-A- 5 415 117
- DATABASE WPI Week 198245, Derwent Publications Ltd., London, GB; Class A47, AN 1998-535657, XP003016838 & JP 10 235 049 A (KYOKUTO SANKI KK) 08 September 1998

## Description

### TECHNICAL FIELD

The present invention relates to a method for the automation of a piecewise advancement and presentation of parts which are planar and joined together into units, comprising the step that a part such as a hook is advanced from a first magazine to a holder unit.

The present invention also relates to an apparatus for the automatic, piecewise advancement and presentation of parts, such as metal hooks, comprising a first magazine for the parts which are joined together into units, and a holder unit.

### BACKGROUND ART

The handling of small parts often takes place manually, even if the automation of certain forms of handling has been successful. A feature common to such handling which has proved difficult or impossible to automate is in general that it has been difficult, in a simple manner, to obtain an unambiguous orientation and exact positioning of the part in space.

The manual handling of parts, for example the suspension of goods which are to be painted or treated otherwise often involves monotonous movements and the risk of wear and stress injuries is high. In addition, there are also economic aspects such as the fact that personnel costs are high, which taken as a whole results in automation being desirable also for such processes which have hitherto not proved possible to automate.

One partial problem is that hooks that are manufactured from wire and have a not insubstantial extent in the longitudinal direction and are also twisted so that they have an extent which is not substantially planar are to be given an arranged orientation and positioning. The parts are often placed disorganised in bulk after manufacture, which impedes automation, since a robot finds difficulty in distinguishing where a part is to be grasped, how it is to be turned and whether more than one part has been grasped or has become caught in the grasped part. Another problem is that different parts, for example hooks that are twisted to different extents are required for different applications, which implies that many different types of parts must be kept in stock. Finally, another problem is that the parts per se are bulky, since they often extend physically outside one and the same plane.

JP 1 0235 049 A discloses a method and an apparatus according to the preambles of claims 1 and 8 respectively.

### PROBLEM STRUCTURE

There is thus a need in the art to make possible an automated part handling with a known position and orientation on discharge, at the same time as a minimum of stock keeping is required and general space-saving is made possible. The part is to be presented in the known position as a finished product.

### SOLUTION

The task forming the basis of the present invention will be attained if the method/apparatus described by way of introduction is characterised in that the holder unit which grasps and presents the part is rotated for a reforming of the part after the part had been grasped, but before it is presented.

Further advantages will be attained if the present invention is moreover characterised by one or more of the characterising features as set forth in appended subclaims 2 to 7 and 9 to 12, respectively.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a perspective view of an apparatus according to the present invention;
- Fig. 2: is a perspective view at a shorter distance of the second magazine included in the present invention;
- Fig. 3: is a perspective view at a shorter distance of a cutting edge and the first magazine included in the present invention;
- Fig. 4: is a perspective view of an advanced part which is exposed;
- Fig. 5: is a perspective view from another angle of the advanced part without exposure;
- Fig. 6: is a perspective view of a reformed part; and
- Fig. 7: is a perspective view of a presented part in a well-defined position.

### DESCRIPTION OF PREFERRED EMBODIMENT

One fundamental concept in the present invention is that those parts 10 that are to be handled, in the preferred embodiment hooks, are present in planar form and are united into larger units 5. The units 5 are compact and space-saving, even on storage.

In their planar form, the parts 10 are possible to use directly after separation from the unit 5 and advancement to a known position. However, in many cases the intention is to obtain a part 10 which displays an extent outside one and the same plane. The planar parts 10 are then to be considered as semi-manufactures which are reformed in connection with their advancement, i.e. after the separation from the unit 5.

The units 5 consist of planar parts 10 which are all oriented in the same direction and which are placed closely adjacent one another. Transversely of the "joints" between the parts 10, there is disposed an elongate anchorage, for example in the form of tape, glue or the like. It must be possible to break the anchorage rapidly so that the parts 10 can be separated off one by one. The anchorage is further disposed on one side of the unit 5 which is readily accessible so that automation of the separation process is facilitated.

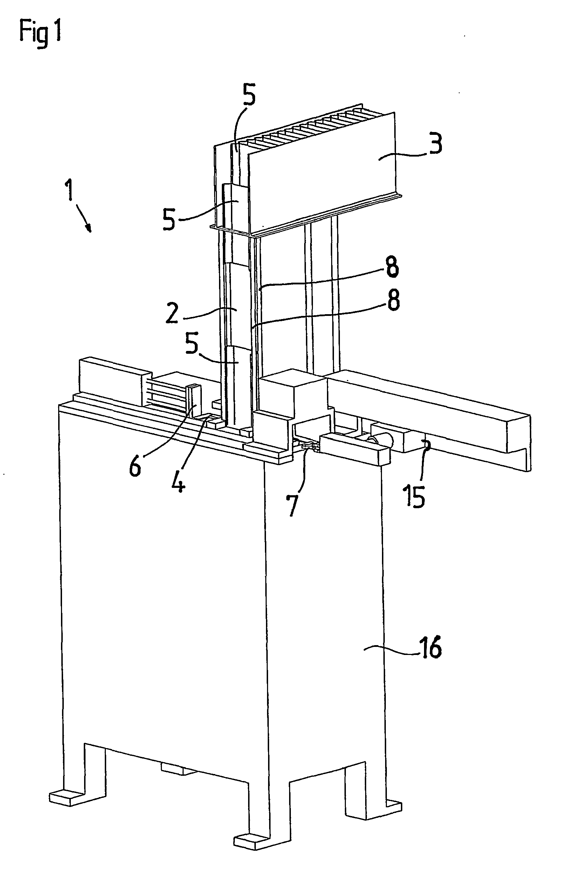

Fig. shows an apparatus according to one preferred embodiment of the invention. The apparatus and its prime movers, for example an electric motor, rest on a frame 16 which is shown lowermost in Fig. 1.

In broad outlines, the apparatus 1 comprises a first magazine or a working magazine 2 and a second magazine or storage magazine 3. In the two magazines 2 and 3, there are disposed units 5 with a number of parts 10 in each unit 5. A separator device in the form of a cutting edge 4 is reciprocally movable for separating one part 10 at a time from the parts 10 included in the units 5.

A feeder device 6 is provided for advancement of a just separated part 10. At the outer end of the apparatus 1, where the part 10 has been advanced, there is disposed a holder unit 7 for grasping the advanced part 10.

In the first magazine or the working magazine 2, the units 5 with planar parts 10 are disposed vertically one on the other. For retaining the parts 10 so that they are led downwards for processing, there are guides 8 which, in the preferred embodiment, consist of substantially parallel rods, but they could also consist of rails, a channel, a tube, etc. The first magazine 2 is not necessarily closed, but it is sufficient that the units 5 and the parts included therein are retained in the first magazine 2 until such time as they have arrived for processing in the lower region of the apparatus. As is clearly apparent in Fig. 1, the units 5 with parts 10 are insertable in the first magazine 2 from its upper end. The units 5 consist of a large number of parts 10 which are disposed in sequence above one another and which are held together by strands of tape, plastic, hot melt glue, lacquer or the like.

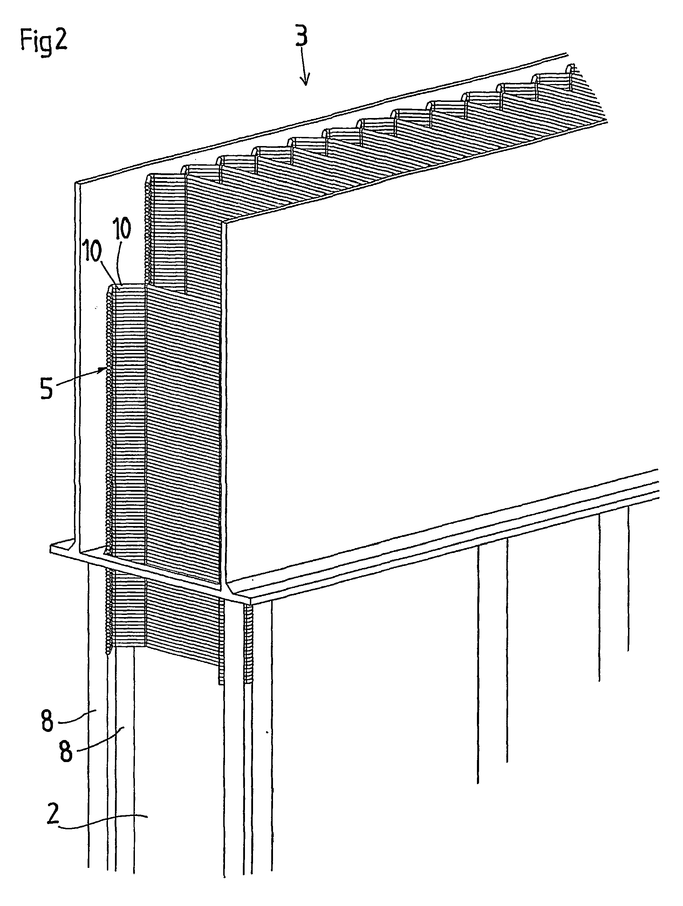

The second magazine or storage magazine 3 is disposed at an angle in relation to the first magazine 2 and houses a larger number of units 5 with parts than will have room in the first magazine 2. The second magazine 3 is disposed to automatically replenish the first magazine 2. To this end, the units 5 with parts 10 are disposed in the second magazine 3 in the same orientation as they are intended to assume in the first magazine 2. In the preferred embodiment, the units 5 are spring biased forwards towards that end where the first magazine 2 connects to the second magazine 3. Alternatively, the second magazine 3 may be gently sloping so that the units 5 slide forwards towards the upper region of the first magazine 2 by force of gravity. As soon as a unit has sunk down into the first magazine 2, the next unit 5 may be advanced forwards in the second magazine 3 and led into the first magazine 2 so that this is replenished. In order more clearly to illustrate how the units 5 fall down from the second magazine 3 to the first magazine 2, the first magazine 2 is illustrated in Figs. 1 and 2 as being partly empty and a unit 5 is precisely on its way down into this magazine from the second magazine 3, as is the case when a second magazine 3 has just been replenished and a part of the units 5 in the first magazine 2 have been advanced, since the apparatus 1 has been constantly in operation. The continuous replenishment of the first magazine 2 entails that the lowermost part 10 therein will always be under a certain pressure, which ensures that the advancement of the parts 10 always functions.

Since the first magazine 2 is at a certain height, not only the pressure lowermost in the first magazine 2 will be ensured, but the dimensioning of the first magazine 2 is such that there is time to replenish the second magazine 3 before the first magazine 2 is empty. Thus, the apparatus 1 can always be continuously run without any downtimes, with the result that it is eminently suitable for integration into a production line which requires a continuous flow of parts.

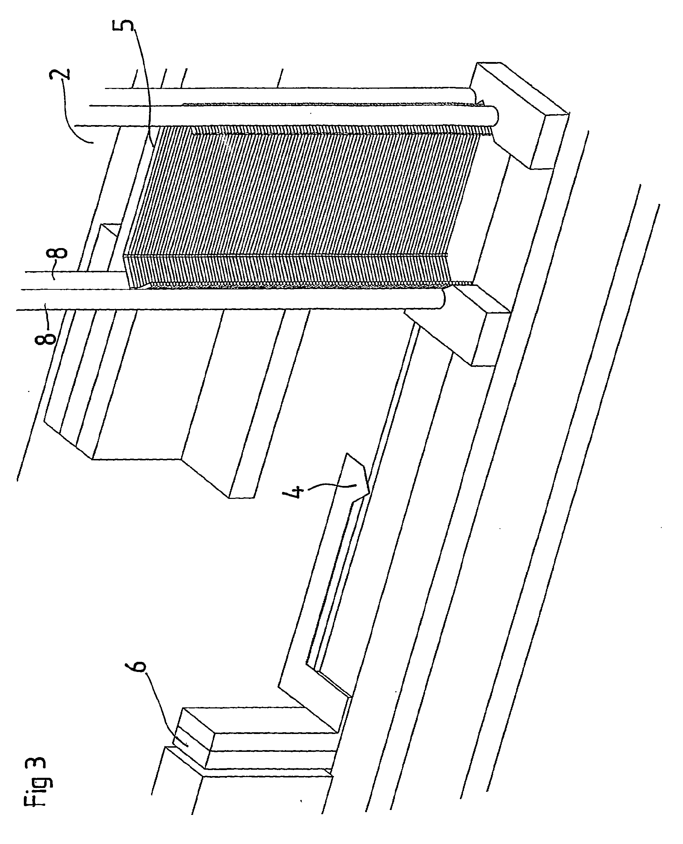

Fig. 3 shows the cutting edge 4 and the lower region of the first magazine 2 in close-up. The cutting edge 4 is disposed to be synchronously movable with the feeder device 6 for cutting the strip, glue strand etc. which is provided for keeping together the parts in the units 5. Thus, the cutting edge 4 is disposed to separate the lowermost part 10 from the rest of the unit 5 so that the part 10 can be displaced in the lateral direction by the movable feeder device 6. The cutting edge 4 is disposed a distance from the feeder device 6 in order that the part 10 be completely released and freed from the unit 5 before the advancement is commenced. The distance of the cutting edge 4 in the vertical direction from the substrate on which the unit 5 rests is naturally adapted so that only the lowermost part 10 will be separated.

The feeder device 6 displaces the part in the lateral direction, i.e. transversely of the longitudinal direction of the unit stack and in the own longitudinal direction of the part 10.

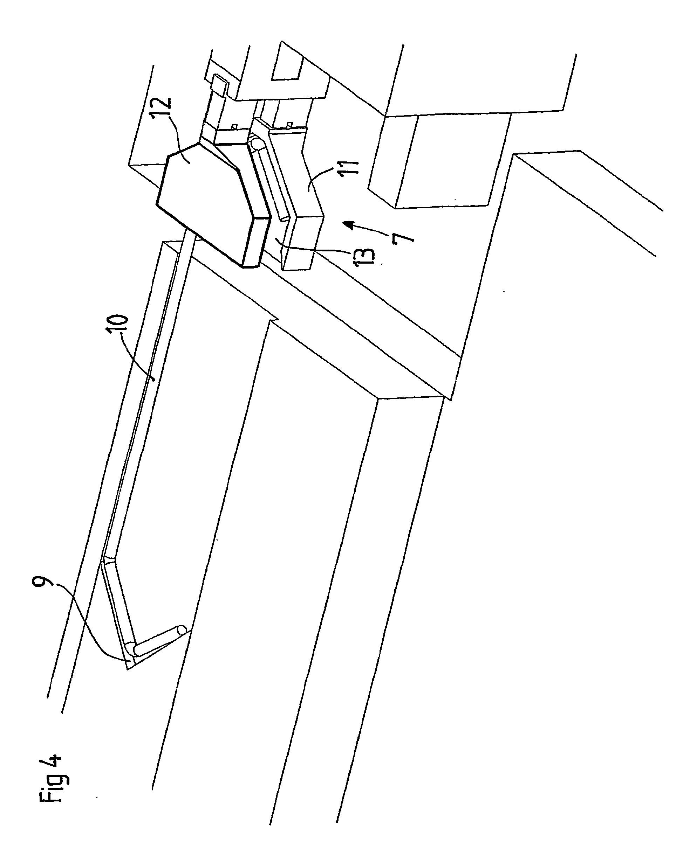

Fig. 4 shows the abutment 9 of the feeder device 6 which will abut against an end portion of the individual part 10. Certain parts of the apparatus are not shown in this Figure, for purposes of clarity, since this would obscure the abutment 9 and the part 10. As is shown in Fig. 3, the abutment 9 is formed so that its abutment surface largely approximates the configuration of the end portion of the part 10. This ensures an even and reliable displacement of the part 10 in the lateral direction, and the risk is avoided that the part 10 is slanted or deformed during the advancement and causes problems such as undesired deformation of the part 10 or downtime in the machine. The height of the abutment 9 corresponds to the height of the part 10 which, in the illustrated embodiment, corresponds to the thickness of the wire from which it is manufactured. The limited height of the abutment 9 ensures that only one part 10 which is released by the cutting edge 4 may be transported in the lateral direction.

A holder unit 7 is disposed to receive the part 10 when this has been advanced a sufficient distance. The holder unit 7 serves the function of a gripping claw which consists of two mutually reciprocal plates 11 and 12. At least the lower plate 11 is provided with a recess 13 in which an end portion of the part 10 is insertable. When the plates 11, 12 have been moved together, the part 10 is fixedly retained therein and is thus withdrawable from the apparatus 1 for further positioning.

At the same time, the plates 11 and 12 are rotary together substantially in a direction along the longitudinal axis of the part 10.This makes for a reforming of the part 10 so that it no longer extends only in one plane.

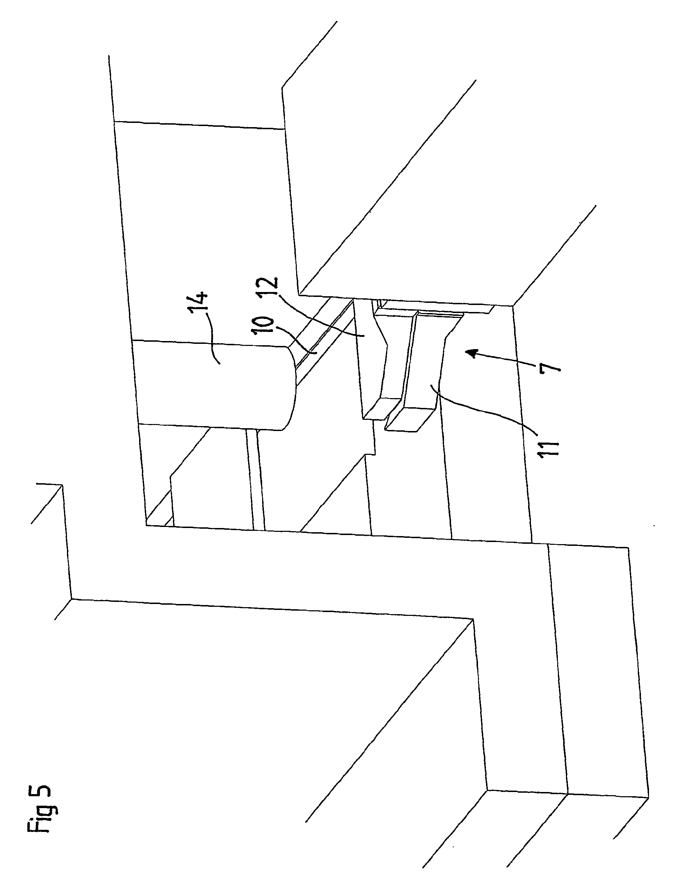

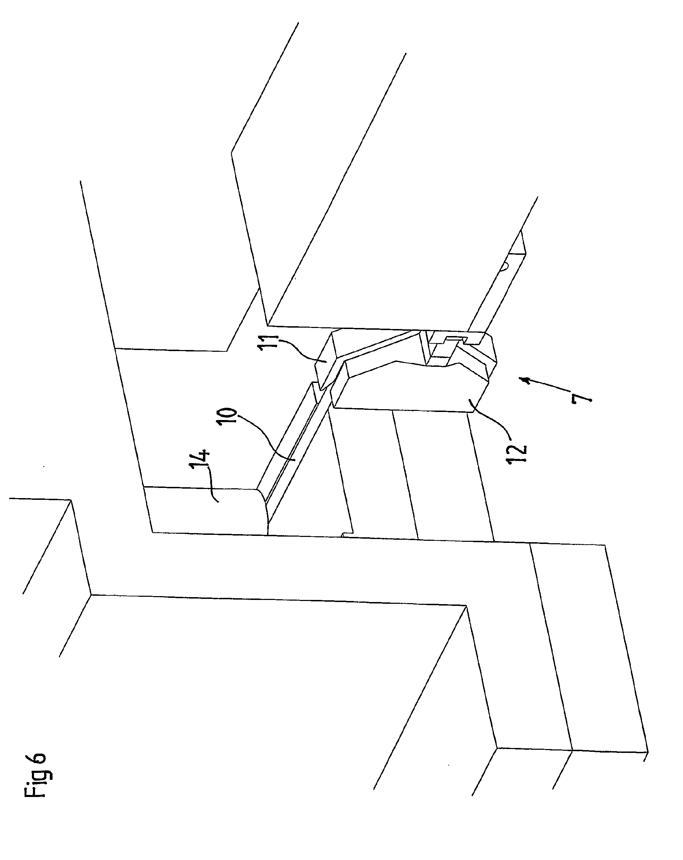

For obtaining a plastic deformation which does not spring back, a back-up device 14 is abutted against the part 10 in the proximity of the region where the twisting is desired, so that the torque is "concentrated" to this region. The back-up device 14 is seen particularly clearly in Figs. 5 and 6.

The rotation of the holder unit 7 is adjustable so that the part 10 may be given any angle whatever between its end portions. A certain overtwisting takes place in some cases, with a subsequent return twist as a phase in avoiding a spring-back effect.

Fig. 6 shows the reforming of the part 10 which, in the preferred embodiment, is a hook, as was mentioned previously.

After possible reforming of the part 10, a positioning is desirable in a suitable position for further stages in the production process. To this end, the holder unit 7 is movable in the longitudinal direction on a slide 15.

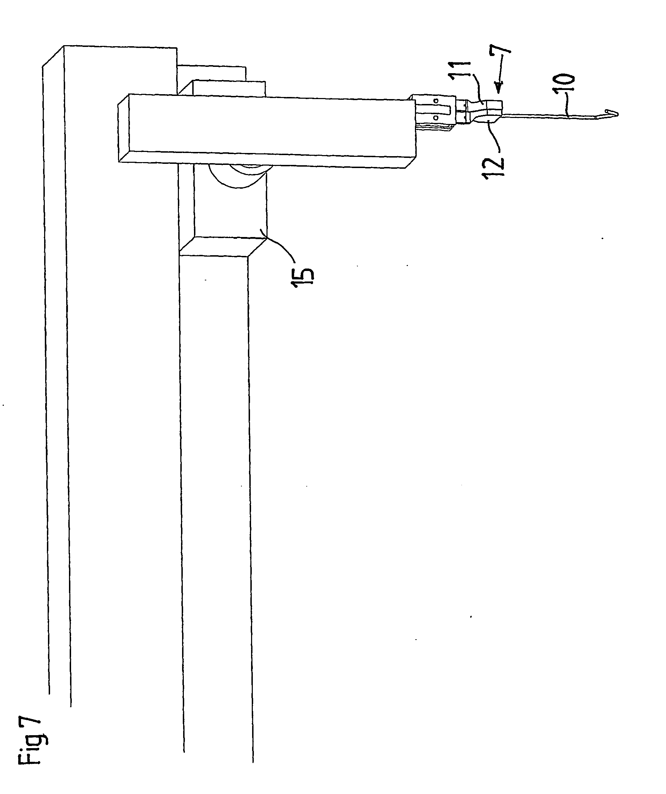

Moreover, the holder unit 7 is pivotal about an axis which is transversely directed, on the one hand in relation to the slide and on the other hand in relation to the holder unit 7. As a result, the extracted part 10 may be given any optional positioning and orientation in space. One example of this is shown in Fig. 7.

In a method according to the present invention, the parts 10 which are to be advanced must first be produced and thereafter combined to form larger units 5. The just manufactured parts 10 are laid adjacent one another, as close to one another as possible, so that they form stacks of a manageable height. In order to hold the parts 10 together in the units 5, they are provided on the one side with an anchorage which may readily be separated by the cutting edge. A few examples of such anchorages are tape, plastic strips with a low melting point, strands of hot-melt glue, lacquer or the like. The units 5 are passed into the second magazine 3 whence they are conveyed further to the first magazine 2 either by spring biasing or by force of gravity, in the manner described above.

That part 10 which is lowermost in the first magazine 2 is cut free by means of an incision through the unifying anchorage as described above. After release, the free part 10 is fed up to the holder unit 7. At the same time, the holder unit 7 moves in a direction to meet the part 10, or alternatively is already in its maximum protracted position so that the part 10 is grasped by the holder unit 7 before it loses contact with the abutment 9. The position of the part 10 is thus well-controlled throughout. The part 10 is grasped and possibly thereafter reformed in that the holder unit 7 is rotated about the longitudinal axis of the part 10. In order to make this possible, a back-up device 14 is applied against the part during the rotation operation.

Thereafter, the part 10 is withdrawn from the apparatus 1 and re-oriented to a desired position. Finally, further processing of the part 10 takes place, for example that an object is suspended thereon, that the part 10 is grasped by some other apparatus or that the part 10 is quite simply released down into a unit intended therefore.

### DESCRIPTION OF ALTERNATIVE EMBODIMENTS

The present invention may naturally be varied in numerous ways without to that end departing from the inventive concept as described above and as defined in the appended Claims. One concrete method of modifying the present invention is to vary the function of the cutting edge 4. Possibly, this may have a cutting operation already on its return stroke, even if, in certain cases, this may entail that it moves in the space between the individual part 10 which is to be cut off and the rest of the unit 5 twice. Another method of varying the severing of an individual part 10 is that the cutting edge 4 is likewise provided with a planing device in order to avoid the risk that residues of lacquer or glue adhere to undesired positions and cause stoppage in the entire apparatus 1.

The present invention may be modified further without departing from the scope of the appended Claims.

## Claims

1. A method for the automation of a piecewise advancement and presentation of parts (10) which are planar and joined together into units (5), comprising the step that a part (10) such as a hook is advanced from a first magazine (2) by a feeder device (9) which shunts the parts (10) ahead of it from the magazine (2) to a holder unit (7), which grasps and presents the part (10) in a desired position, **characterised in that** the holder unit (7) is rotated for a reforming of the part (10), after the part has been grasped, but before it is presented.

2. The method as claimed in Claim 1, **characterised in that** a clamping device (14) is abutted against the part before the holder unit is rotated.

3. The method as claimed in Claim 1 or 2, **characterised in that** an adjustment of the rotation of the holder unit (7) takes place, so that the reforming of the part is selectable.

4. The method as claimed in any of Claims 1 to 3, **characterised in that** the holder unit (7) guidably moves in the lateral direction and is angled so that the part (10) is presented in an exactly defined position in space.

5. The method as claimed in any of Claims 1 to 4, **characterised in that** the parts (10) are disposed closely adjacent one another in a stack and are united into units (5) with the aid of strip-shaped material such as tape, hot-melt glue, plastic strip with a low melting point, before they are placed in the first magazine (2).

6. The method as claimed in Claim 5, **characterised in that** the part (10) which is to be advanced is separated from remaining parts (10) **in that** the strip-shaped material is severed between that part (10) and the remaining parts (10).

7. The method as claimed in any of Claims 1 to 6, **characterised in that** further parts (10) are placed in a second magazine (3) whence the parts (10) are replenished into the first magazine (2).

8. An apparatus for the automatic piecewise advancement and presentation of parts (10), such as metal hooks, comprising a first magazine (2) for the parts (10) which are united into units (5), a holder unit (7), a separator device provided for separating the part (10) most proximal the end of the first magazine (2) from the remaining parts (10) prior to advancement, and a feeder device (9) which is movable transversely of the longitudinal direction of the first magazine (2) is disposed for shunting advancement of a part (10) from the end of the first magazine (2) to the holder unit (7) for grasping and presenting the part (10), **characterised in that** the holder unit (7) is rotary for a reforming of the part (10) after the advancement and grasping thereof.

9. The apparatus as claimed in Claim 8, **characterised in that** a clamping device (14) is disposed to abut against the part (10) during the reforming.

10. The apparatus as claimed in any of Claims 8 to 9, **characterised in that** the holder unit (7) is guidably movable in the lateral direction, rotatable and anglable for presentation of the part (10) in a well-defined position.

11. The apparatus as claimed in any of Claims 8 to 10, **characterised in that** the separator device is a movable cutting edge (4).

12. The apparatus as claimed in any of Claims 8 to 11, **characterised in that** a second, larger magazine (3) is provided for replenishment of the first magazine (2).

## Patentansprüche

1. Verfahren für die Automatisierung einer Stückförderung und -präsentation von Teilen (10), die flach sind und zu Einheiten (5) miteinander verbunden werden, umfassend den Schritt, dass ein Teil (10) wie ein Haken von einem ersten Magazin (2) über eine Zufuhrvorrichtung (9), die die Teile (10) von dem Magazin (2) vor sich herschiebt, zu einer Haltereinheit (7) befördert wird, die das Teil (10) greift und in einer gewünschten Position präsentiert, **dadurch gekennzeichnet, dass** die Haltereinheit (7) zum Umformen des Teils (10) gedreht wird, nachdem das Teil gegriffen wurde, aber bevor es präsentiert wird.

2. Verfahren nach Anspruch 1, **dadurch gekennzeichnet, dass** eine Klemmvorrichtung (14) an das Teil angrenzt, bevor die Haltereinheit gedreht wird.

3. Verfahren nach Anspruch 1 oder 2, **dadurch gekennzeichnet, dass** eine Einstellung der Drehung der Haltereinheit (7) stattfindet, sodass die Umformung des Teils auswählbar ist.

4. Verfahren nach einem der Ansprüche 1 bis 3, **dadurch gekennzeichnet, dass** sich die Haltereinheit (7) lenkbar in seitlicher Richtung verlagert und derart abgewinkelt ist, dass das Teil (10) in einer exakt definierten Position im Raum präsentiert wird.

5. Verfahren nach einem der Ansprüche 1 bis 4, **dadurch gekennzeichnet, dass** die Teile (10) nah benachbart zueinander in einem Stapel angeordnet sind und unter Zuhilfenahme von streifenförmigem Material wie Band, Schmelzklebstoff, Kunststoffstreifen mit geringem Schmelzpunkt zu Einheiten (5) vereint werden, bevor sie in dem ersten Magazin (2) angeordnet werden.

6. Verfahren nach Anspruch 5, **dadurch gekennzeichnet, dass** das Teil (10), das befördert werden soll, von den restlichen Teilen (10) getrennt wird, indem das streifenförmige Material zwischen diesem Teil (10) und den restlichen Teilen (10) durchtrennt wird.

7. Verfahren nach einem der Ansprüche 1 bis 6, **dadurch gekennzeichnet, dass** weitere Teile (10) in einem zweiten Magazin (3) angeordnet werden, von wo aus die Teile (10) in das erste Magazin (2) aufgefüllt werden.

8. Vorrichtung für die automatische Stückbeförderung und -präsentation von Teilen (10) wie Metallhaken, umfassend ein erstes Magazin (2) für die Teile (10), die zu Einheiten (5) vereint werden, eine Haltereinheit (7), eine Trennvorrichtung zum Trennen des Teils (10), das am nächsten zu dem Ende des ersten Magazins (2) angeordnet ist, von den restlichen Teilen (10) vor der Beförderung, und eine Zuführvorrichtung (9), die quer zu der Längsrichtung des ersten Magazins (2) beweglich ist, angeordnet ist, um ein Teil (10) von dem Ende des ersten Magazins (2) der Haltereinheit (7) zum Greifen und Präsentieren des Teils (10) durch Verschieben zu befördern, **dadurch gekennzeichnet, dass** die Haltereinheit (7) zum Umformen des Teils (10) nach der Beförderung und dem Greifen davon drehbar ist.

9. Vorrichtung nach Anspruch 8, **dadurch gekennzeichnet, dass** eine Klemmvorrichtung (14) angeordnet ist, um während des Umformens an dem Teil (10) anzugrenzen.

10. Vorrichtung nach einem der Ansprüche 8 bis 9, **dadurch gekennzeichnet, dass** die Haltereinheit (7) lenkbar in seitlicher Richtung beweglich ist und für die Präsentation des Teils (10) in eine gut definierte Position drehbar und abwinkelbar ist.

11. Vorrichtung nach einem der Ansprüche 8 bis 10, **dadurch gekennzeichnet, dass** die Trennvorrichtung eine bewegliche Schneidkante (4) ist.

12. Vorrichtung nach einem der Ansprüche 8 bis 11, **dadurch gekennzeichnet, dass** ein zweites, größeres Magazin (3) zum Ausfüllen des ersten Magazins (2) bereitgestellt ist.

## Revendications

1. Procédé pour l'automatisation de l'avance pièce par pièce et de la présentation de pièces (10) planes et réunies les unes aux autres pour former des unités (5), comprenant l'étape consistant à faire avancer une pièce (10) telle qu'un crochet depuis un premier magasin (2) par un dispositif d'alimentation (9) qui manoeuvre les pièces (10) devant lui provenant du magasin (2) jusqu'à une unité de préhension (7) qui saisit et présente la pièce (10) dans une position souhaitée, **caractérisé en ce que** l'unité de préhension (7) est tournée pour reformer la pièce (10), après que la pièce a été saisie, mais avant sa présentation.

2. Procédé selon la revendication 1, **caractérisé en ce qu'**un dispositif de serrage (14) est mis en butée contre la pièce avant que l'unité de préhension ne soit tournée.

3. Procédé selon la revendication 1 ou 2, **caractérisé en ce qu'**un ajustement de la rotation de l'unité de préhension (7) a lieu, de telle sorte que la reformation de la pièce puisse être sélectionnée.

4. Procédé selon l'une quelconque des revendications 1 à 3, **caractérisé en ce que** l'unité de préhension (7) se déplace de manière guidable dans la direction latérale et est inclinée de telle sorte que la pièce (10) soit présentée dans une position exactement définie dans l'espace.

5. Procédé selon l'une quelconque des revendications 1 à 4, **caractérisé en ce que** les pièces (10) sont disposées de manière étroitement adjacente les unes aux autres en pile, et sont réunies en unités (5) à l'aide d'un matériau en forme de bande tel qu'un ruban, un adhésif thermofusible, une bande plastique à faible point de fusion, avant d'être placées dans le premier magasin (2).

6. Procédé selon la revendication 5, **caractérisé en ce que** la pièce (10) qui doit être avancée est séparée des pièces restantes (10) par sectionnement du matériau en forme de bande entre ladite pièce (10) et les pièces restantes (10).

7. Procédé selon l'une quelconque des revendications 1 à 6, **caractérisé en ce que** d'autres pièces (10) sont placées dans un deuxième magasin (3) depuis lequel les pièces (10) sont réapprovisionnées dans le premier magasin (2).

8. Appareil pour l'avance pièce par pièce et la présentation automatisées de pièces (10), telles que des crochets métalliques, comprenant un premier magasin (2) pour les pièces (10) qui sont réunies en unités (5), une unité de préhension (7), un dispositif séparateur prévu pour séparer la pièce (10) la plus proche de l'extrémité du premier magasin (2) des pièces restantes (10) avant l'avance, et un dispositif d'alimentation (9) qui est déplaçable transversalement à la direction longitudinale du premier magasin (2) et est disposé de manière à manoeuvrer l'avance d'une pièce (10) depuis l'extrémité du premier magasin (2) jusqu'à l'unité de préhension (7) pour saisir et présenter la pièce (10), **caractérisé en ce que** l'unité de préhension (7) est capable de tourner pour reformer la pièce (10) après l'avance et la préhension de cette dernière.

9. Appareil selon la revendication 8, **caractérisé en ce qu'**un dispositif de serrage (14) est disposé de manière à venir buter contre la partie (10) au cours de la reformation.

10. Appareil selon la revendication 8 ou 9, **caractérisé en ce que** l'unité de préhension (7) est déplaçable de manière guidable dans la direction latérale, de manière à pouvoir tourner et être inclinée pour présente la pièce (10) dans une position bien définie.

11. Appareil selon l'une quelconque des revendications 8 à 10, **caractérisé en ce que** le dispositif séparateur est un bord de coupe déplaçable (4).

12. Appareil selon l'une quelconque des revendications 8 à 11, **caractérisé en ce qu'**un deuxième magasin plus grand (3) est prévu pour réapprovisionner le premier magasin (2).
